# EUROPÄISCHE PATENTSCHRIFT

(11) **EP 2 883 749 B1**
(45) Veröffentlichungstag und Bekanntmachung des Hinweises auf die Patenterteilung: **17.05.2017**
(21) Anmeldenummer: 14003346.5
(22) Anmeldetag: 27.09.2014
(51) Int. Cl.: B60R 7/06

(54) **Verschließbares Staufach, insbesondere im Fussraum eines Kraftfahrzeugs**
Lockable storage compartment, in particular in the foot well of a motor vehicle
Compartiment de rangement pouvant être fermé, notamment dans le plancher d'un véhicule automobile

(30) Priorität: 12.12.2013 DE 102013020794
(43) Veröffentlichungstag der Anmeldung: 17.06.2015
(73) Patentinhaber: MAN Truck & Bus AG, 80995 München (DE)
(72) Erfinder: Schönherr, Stephan, 86153 Augsburg (DE); Lipp, Andrea, 72119 Ammerbruch (DE); Burmeister, Achim, 85232 Bergkirchen (DE)
(74) Vertreter: Liebl, Thomas

(56) Entgegenhaltungen:
- EP-A1- 1 048 525
- DE-A1-102005 057 188
- DE-A1-102009 009 527
- DE-A1-102011 102 637
- JP-A- 2005 067 313
- US-A- 5 197 775

## Beschreibung

Die Erfindung betrifft ein verschließbares Staufach nach dem Oberbegriff des Anspruchs 1. Ein solches Staufach wird durch die US 5 197 775 offenbart.

Verschließbare Staufächer in Kraftfahrzeugen, sind in vielen Ausführungsformen allgemein bekannt. Insbesondere sind Staufächer mit vertikalen Öffnungen bekannt, die durch ausschwenkbare Staufachtüren verschließbar sind. Solche Staufachtüren stehen in der Offenstellung nachteilig weit in den Raum vor dem Staufach ab und sind insbesondere bei einem Staufacheinbau in beengten Platzverhältnissen, beispielsweise im Fußraum seitlich vor einem Fahrersitz eines Nutzfahrzeugs, hinderlich und gegebenenfalls auch aus Sicherheitsgründen nicht akzeptabel.

Aufgabe der Erfindung ist es daher ein verschließbares Staufach mit zwei Abdeckklappen, insbesondere im Fußraum eines Kraftfahrzeugs, so weiterzubilden, dass bei einfacher Handhabung auch bei geöffneten Klappen davon keine oder nur eine geringe Behinderung bei wenig Platzbedarf ausgeht.

Diese Aufgabe wird gelöst mit den Merkmalen des unabhängigen Anspruchs. Vorteilhafte Ausgestaltungen sind Gegenstand der Unteransprüche.

Erfindungsgemäß ist vorgesehen, dass eine untere, vorzugsweise plane, Abdeckklappe in der Geschlossenstellung vertikal ausgerichtet ist und einen unteren vertikalen Öffnungsbereich des Staufachs abdeckt. Die untere Abdeckplatte soll dabei wenigstens etwa die halbe Staufachhöhe, vorzugsweise etwa 2/3 der Staufachhöhe abdecken und um eine im Bereich ihrer Unterkante liegenden Schwenkachse in einen Bereich vor das Staufach aufschwenkbar sein. Weiter ist eine obere Abdeckklappe vorgesehen, die in der Geschlossenstellung, vorzugsweise anschließend an die horizontale Oberkante der unteren Abdeckklappe und/oder schräg nach oben und hinten verlaufend, einen oberen Öffnungsbereich des Stauraums abdeckt. In der Offenstellung ist die obere Abdeckklappe in das Staufach hinein verlagerbar, wodurch ein Eingriff von oben her in das Staufach möglich ist. Sämtlichen Richtungs- und Ortsangaben beziehen sich hier und nachfolgend auf eine Hochachsenrichtung, insbesondere eine Fahrzeughochachsenrichtung, und/oder auf eine Einbaulage des Staufachs.

Das erfindungsgemäße Staufach kann mit seinem Öffnungsmechanismus je nach Bedarf unterschiedlich gehandhabt werden:
Wenn nur die obere Abdeckklappe geöffnet wird, ist ein Eingriff in das Staufach zum Einlegen oder Entnehmen von Gegenständen von oben her möglich. Für die Offenstellung der oberen Abdeckklappe ist kein Raumbedarf im Bereich vor oder neben dem Staufach erforderlich, da die obere Abdeckklappe in der Offenstellung in das Staufachinnere verlagert wird. Dies kann die übliche Handhabung sein, beispielsweise für einen Fahrer eines Kraftfahrzeugs während des Fahrbetriebs.

Wenn zum Beispiel größere Gegenstände in das Staufach eingelegt oder daraus entnommen werden sollen, kann jedoch auch die untere Abdeckklappe, insbesondere bei gleichzeitiger Offenstellung der oberen Abdeckklappe für einen großen Eingriffbereich ausgeschwenkt werden. Dies wird regelmäßig nicht im Fahrbetrieb erfolgen - bei einem Fahrzeugstillstand ist aber eine ausgeschwenkte untere Klappe hinnehmbar.

In einer besonders bevorzugten Ausführungsform weist das Staufach zudem eine feste nicht öffenbare Oberwand auf, die insbesondere bedingt durch einen Unterbau oder Einbau des Staufachs den hinteren Stauraumbereich mit definiert geringer bzw. geringerer Tiefe nach oben begrenzt. Die obere Abdeckklappe deckt dann in ihrer schrägen Geschlossenstellung den Öffnungsbereich zwischen der Vorderkante der Oberwand und der Oberkante der unteren Abdeckklappe ab. In der Offenstellung kann dann die obere Abdeckklappe in den Bereich unter diese Oberwand verlagert werden.

Für die Verlagerung der oberen Abdeckklappe in ihre Geschlossenstellung, insbesondere unter die hintere Oberwand, kann ein Schwenkmechanismus verwendet werden. Dazu können seitlich an der oberen Abdeckklappe Wangenteile angebracht sein, die an seitlichen Drehlagern des Staufachs schwenkbar angeschlossen sind.

Alternativ kann eine Verlagerung der oberen Abdeckklappe auch mittels Führungsnuten an den Innenseiten der Staufachseitenwände erfolgen.

Dazu ist die obere Abdeckklappe vorzugsweise einteilig ausgebildet. Wenn die obere Abdeckklappe zudem konvex nach außen gewölbt ist, beispielsweise in der Form eines Zylinderausschnitts, wird im Wölbungsbereich der Stauraum vergrößert und zudem ein ansprechendes Design geschaffen.

Die obere Abdeckklappe kann jedoch auch mehrteilig durch Lamellen in der Art eines Rollos ausgebildet sein und in seitlichen Führungen an den Staufachseitenwänden geführt und zwischen der Offenstellung und Geschlossenstellung verschoben werden.

In einer besonders bevorzugten Weiterbildung wird vorgeschlagen, den Aufschwenkbereich der unteren Abdeckklappe durch wenigstens einen Anschlag und/oder wenigstens ein Spannelement auf einen vorgegebenen Aufschwenkwinkel zu begrenzen. Dadurch steht in der Offenstellung die untere Abdeckklappe raumsparend und einfach zu handhaben schräg nach vorne am Staufach ab, wobei dennoch ein großer Eingriffbereich bei geöffneter oberer Abdeckklappe in das Staufach zur Verfügung steht. Geeignete begrenzte Aufschwenkwinkel liegen etwa zwischen 45 und 60 Grad.

Das erfindungsgemäße Staufach mit seinem Öffnungsmechanismus eignet sich besonders gut zum Einbau in einen Fußraum seitlich vor einem Fahrersitz eines Kraftfahrzeugs, insbesondere eines Nutzfahrzeugs, wobei das Staufach von oben her beispielsweise durch eine Konsole oder Armauflage im Bereich einer festen, nicht öffenbaren hinteren Oberwand abgedeckt ist. Gerad in dieser Einbausituation ist es wesentlich, dass von einem Öffnungsmechanismus des verschließbaren Staufachs keine oder nur sehr geringe Behinderungen ausgehen können.

Die Begrifflichkeit Klappe ist hier zudem in einem umfassenden Sinne zu verstehen und soll ausdrücklich jedes geeignete Bauteil bzw. Abdeckelement umfassen, mit dem oder denen der vorliegende Erfindungsgedanke in identischer oder äquivalenter bzw. analoger Weise konstruktiv umgesetzt werden kann. Des Weiteren kann die jeweilige Abdeckklappe im Rahmen der vorliegenden Erfindungsidee selbstverständlich nicht nur einteilig, sondern auch mehrteilig ausgebildet sein, das heißt die obere und/oder untere Abdeckklappe kann selbstverständlich wieder durch mehrere einzelne funktional gleichwirkende Klappen gebildet sein, die unabhängig voneinander betätigbar bzw. bedienbar sind oder aber auch, entsprechend untereinander gekoppelt, wie vorbeschrieben gemeinsam bedient bzw. betätigt werden können.

Anhand einer Zeichnung wird die Erfindung weiter erläutert.

Es zeigen:
Fig. 1 ein geschlossenes Staufach in der Einbausituation im Fußraum seitlich vor einem Fahrersitz eines Nutzfahrzeug,
Fig. 2 eine vergrößerte Darstellung des Staufachs mit teilweise geöffneter oberer Abdeckklappe,
Fig. 3 das Staufach nach Fig. 2 mit der oberen Abdeckklappe in ihrer Offenstellung,
Fig. 4 das Staufach nach Fig. 2 mit zusätzlich teilweise geöffneter unterer Abdeckklappe,
Fig. 5 das Staufach nach Fig. 2 mit vollständig geöffneter unterer Abdeckklappe und eingelagertem Gepäckstück, und
Fig. 6 eine Entnahmesituation für das Gepäckstück nach Fig. 5.

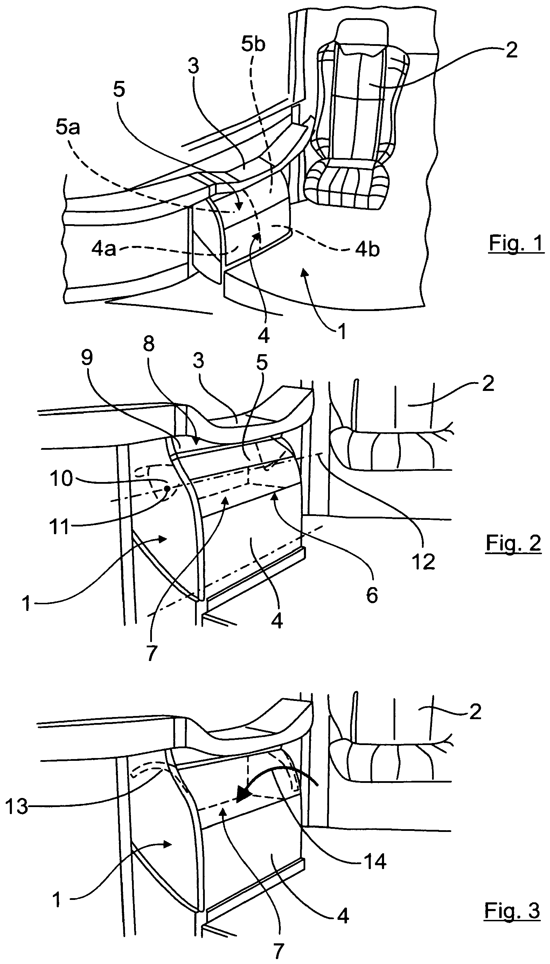

In Fig. 1 ist in perspektivischer Ansicht ein Staufach 1 gezeigt, das seitlich im Fußraum vor einem Fahrersitz 2 eines Nutzfahrzeugs unter einer Armstütze 3 eingebaut ist, wobei die Armstütze 3 in der Tiefe einen hinteren Teil des Staufachs 1 überdeckt.

Das Staufach 1 weist eine untere, hier plane, Abdeckklappe 4 und eine obere konvex gewölbte Abdeckplatte 5 auf, deren Funktionen weiter anhand der Fig. 2 bis 6 näher erläutert werden.

Die obere Abdeckklappe 5 verläuft in ihrer Geschlossenstellung (Fig. 1) anschließend an eine horizontale Oberkante 6 der unteren Abdeckklappe 4 schräg nach oben und hinten und deckt einen oberen Öffnungsbereich 7 des Staufachs 1 ab. Der obere Öffnungsbereich 7 ist unter der Armstütze 3 durch eine feste nicht öffenbare Oberwand 9 des Staufachs 1 begrenzt, so dass die obere Abdeckklappe 5 in der Geschlossenstellung den Bereich zwischen der horizontalen Oberkante 6 der unteren Abdeckklappe 4 und der Vorderkante 8 der Oberwand 9 begrenzt. Diese Oberwand 9 kann auch gegebenenfalls durch die Unterseite der Armstütze oder durch andere Einbauelemente gebildet sein.

In Fig. 2 ist die obere Abdeckklappe 5 durch eine Aufschwenkbewegung bereits etwa zur Hälfte geöffnet. Ein solches Aufschwenken kann beispielsweise dadurch realisiert werden, dass die obere Abdeckklappe 5 mittels beidseitigen Wangenteilen 10 an zugeordneten Schwenklagern 11 an der Staufachinnenseite gelagert und um eine Schwenkachse 12 aus dem Öffnungsbereich nach hinten unter die Oberwand 9 schwenkbar ist.

In Fig. 3 ist die obere Abdeckklappe 5 bereits in ihrer vollen Offenstellung gezeigt, wodurch der gesamte obere Öffnungsbereich 7 freigegeben ist. Alternativ zu Fig. 2 ist hier anstelle einer Schwenklagerung eine weitere Art der Verlagerungsmöglichkeit dargestellt: in entsprechend der konvexen Form gekrümmten Führungsnuten 13 an der Staufachinnenseite ist die obere Abdeckklappe 5 verschiebbar.

Mit dem Pfeil 14 ist die Eingriffmöglichkeit eines Fahrers von schräg oben in das Staufach (bei geschlossener unterer Abdeckklappe 4 gezeigt), wobei kein Raumbedarf vor oder seitlich des Staufachs 1 erforderlich ist, so dass auch bei offener oberer Abdeckklappe 5 keine Behinderung vom Staufach 1 ausgeht.

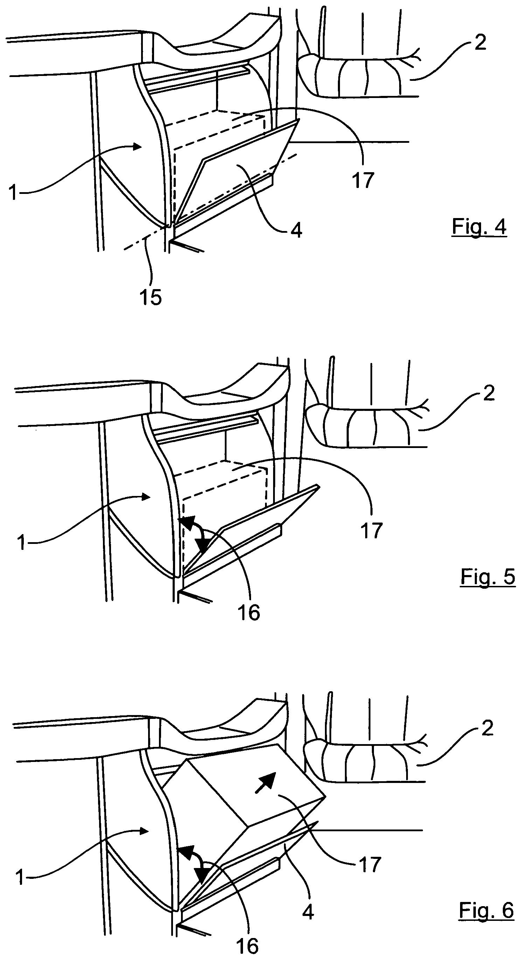

Die untere Abdeckklappe 4 ist um eine im Bereich ihrer Unterkante liegenden Schwenkachse 15 nach vorne aufschwenkbar gelagert. In Fig. 4 ist dazu (bei geöffneter oberer Abdeckklappe 5) die untere Abdeckklappe 4 in ihrer teilweisen Offenstellung gezeigt.

In Fig. 5 ist die untere Abdeckklappe 4 in ihrer vollen Offenstellung gezeigt, wobei der Aufschwenkwinkel 16 durch (nicht dargestellte) Anschlagelemente auf ca. 45 Grad begrenzt ist, so dass die untere Abdeckklappe 4 in der aufgeschwenkten Offenstellung nur mit relativ geringem Platzbedarf vor dem Stauchfach 1 schräg absteht. In den Fig. 4 und 5 ist (strichliert) ein großes Gepäckstück (17) eingezeichnet, das etwa den gesamten unteren Staufachbereich etwa bis zur Höhe der Oberkante 6 der geschlossenen unteren Abdeckklappe 4 einnimmt. Aus Fig. 6 ist ersichtlich, dass auch ein so großes Gepäckstück 17 bei geöffneter unterer Abdeckklappe 4 entnommen werden kann, auch wenn diese nur mit einem begrenzten Aufschwenkwinkel 16 öffenbar ist.

Wie in Fig. 1 lediglich strichliert eingezeichnet, kann die obere Abdeckklappe 4 und/oder die untere Abdeckklappe 5 gegebenenfalls auch mehrteilig ausgebildet sein und zum Beispiel funktional gleiche Teilklappenbereiche 4a, 4b bzw. 5a, 5b aufweisen, die zum Beispiel für Teileingriffe separat betätigbar sein können. Mittels entsprechender Kopplungsmittel, zum Beispiel Verriegelungselemente, können diese Teilklappenbereiche 4a, 4b bzw. 5a, 5b dann auch so miteinander gekoppelt werden, dass diese gemeinsam betätigt bzw. verlagert werden können.

### Bezugszeichen

- 1: Staufach
- 2: Fahrersitz
- 3: Armstütze
- 4: untere Abdeckklappe
- 5: obere Abdeckklappe
- 6: horizontale Oberkante
- 7: oberer Öffnungsbereich
- 8: Vorderkante
- 9: Oberwand
- 10: Wangenteil
- 11: Schwenklager
- 12: Schwenkachse
- 13: Führungsnut
- 14: Pfeil
- 15: Schwenkachse
- 16: Aufschwenkwinkel
- 17: Gepäckstück

## Patentansprüche

1. Verschließbares Staufach (1), insbesondere im Fußraum eines Kraftfahrzeugs, mit zwei Abdeckklappen (4, 5) zum Verschließen einer Stauraumöffnung des Staufachs,
**dadurch gekennzeichnet,**
**dass** eine, bezogen auf eine Hochachsenrichtung und/oder Einbaulage, untere Abdeckklappe (4) in der Geschlossenstellung vertikal ausgerichtet ist und einen unteren vertikalen Öffnungsbereich der Stauraumöffnung des Staufachs (1) abdeckt, wobei die untere Abdeckklappe (4) um eine im Bereich ihrer Unterkante liegenden Schwenkachse (15) dergestalt von der Stauraumöffnung weg nach vorne aufschwenkbar ist, dass der untere Öffnungsbereich der Stauraumöffnung gegenüber der Geschlossenstellung vergrößert ist, und
**dass** eine, bezogen auf die Hochachsenrichtung und/oder Einbaulage, obere und unabhängig von der unteren Abdeckklappe (4) betätigbare Abdeckklappe (5) in der Geschlossenstellung einen oberen Öffnungsbereich (7) der Stauraumöffnung des Staufachs (1) abdeckt, wobei in der Offenstellung die obere Abdeckklappe (5) in das Staufachinnere hinein verlagert ist und ein Eingriff von oben her in das Staufach (1) sowohl bei sich in der Offenstellung als auch bei sich in der Geschlossenstellung befindlicher unterer Abdeckklappe (4) möglich ist.

2. Verschließbares Staufach nach Anspruch 1, **dadurch gekennzeichnet, dass** die obere Abdeckklappe (5) in der Geschlossenstellung an eine horizontale Oberkante (6) der unteren Abdeckklappe (4) anschließt und/oder schräg nach oben und hinten verläuft.

3. Verschließbares Staufach nach Anspruch 1 oder 2, **dadurch gekennzeichnet, dass** die untere Abdeckklappe (4) wenigstens etwa die halbe Staufachhöhe, vorzugsweise etwa 2/3 der Staufachhöhe abdeckt.

4. Verschließbares Staufach nach einem der vorhergehenden Ansprüche, **dadurch gekennzeichnet,**
**dass** das Staufach (1) eine feste, nicht öffenbare Oberwand (9) aufweist, die, insbesondere bedingt durch einen Unterbau (3) oder Einbau des Staufachs (1), den Stauraumbereich nach oben begrenzt, und
**dass** die obere Abdeckklappe (5) in ihrer Geschlossenstellung, vorzugsweise in ihrer schrägen Geschlossenstellung, den Öffnungsbereich (7) zwischen der Vorderkante (8) der Oberwand (9) und der Oberkante (6) der unteren Abdeckklappe (4) abdeckt.

5. Verschließbares Staufach nach einem der vorhergehenden Ansprüche, **dadurch gekennzeichnet, dass** die obere Abdeckklappe (5) um eine Schwenkachse (12) zwischen der Geschlossenstellung und Offenstellung schwenkbar ist und in der Offenstellung in den Staufachbereich hinein, insbesondere unter eine hintere Oberwand (9), schwenkbar ist.

6. Verschließbares Staufach nach einem der Ansprüche 1 bis 4, **dadurch gekennzeichnet, dass** die obere Abdeckklappe (5) in jeweils seitlich an den Staurauminnenseiten angebrachten Führungen (13) zwischen der Geschlossenstellung und Offenstellung, insbesondere unter eine hintere Oberwand (9), verschiebbar ist.

7. Verschließbares Staufach nach einem der vorhergehenden Ansprüche, **dadurch gekennzeichnet, dass** die obere Abdeckklappe (5) einteilig ausgebildet ist.

8. Verschließbares Staufach nach Anspruch 7, **dadurch gekennzeichnet, dass** die obere Abdeckklappe (5) konvex, in der Form eines Zylinderausschnitts, insbesondere eines Kreiszylinderausschnitts, gewölbt ist.

9. Verschließbares Staufach nach einem der Ansprüche 1 bis 6, **dadurch gekennzeichnet, dass** die obere Abdeckklappe (5) mehrteilig durch Lamellen in der Art eines Rollos ausgebildet und in Führungen geführt ist.

10. Fahrzeug, insbesondere Nutzfahrzeug, mit einem verschließbaren Staufach nach einem der vorhergehenden Ansprüche.

11. Fahrzeug nach Anspruch 10, **dadurch gekennzeichnet, dass** das Staufach (1) im Fußraum seitlich vor einem Fahrersitz (2) eines Kraftfahrzeugs, insbesondere eines Nutzfahrzeugs, eingebaut ist.

## Claims

1. Lockable storage compartment (1), in particular in the footwell of a motor vehicle, having two covering flaps (4, 5) for closing a storage compartment opening of the storage compartment, **characterized in that** a lower (in relation to a vertical axis direction and/or installed position) covering flap (4) is oriented vertically in the closed position and covers a lower vertical opening region of the storage compartment opening of the storage compartment (1), the lower covering flap (4) being pivotable forwards away from the storage compartment opening about a pivot axis (15) which lies in the region of its lower edge, in such a way that the lower opening region of the storage compartment opening is enlarged in comparison with the closed position, and **in that** an upper (in relation to the vertical axis direction and/or installed position) covering flap (5) which can be actuated independently of the lower covering flap (4) covers an upper opening region (7) of the storage compartment opening of the storage compartment (1) in the closed position, the upper covering flap (5) being moved into the storage compartment interior in the open position, and it being possible to reach from above into the storage compartment (1) both in the case of a lower covering flap (4) which is situated in the open position and in the case of a lower covering flap (4) which is situated in the closed position.

2. Lockable storage compartment according to Claim 1, **characterized in that** the upper covering flap (5) adjoins a horizontal upper edge (6) of the lower covering flap (4) in the closed position and/or runs obliquely upwards and rearwards.

3. Lockable storage compartment according to Claim 1 or 2, **characterized in that** the lower covering flap (4) covers at least approximately half the storage compartment height, preferably approximately two thirds of the storage compartment height.

4. Lockable storage compartment according to one of the preceding claims, **characterized in that** the storage compartment (1) has a fixed upper wall (9) which cannot be opened and, in particular as a result of a lower construction (3) or fitting of the storage compartment (1), delimits the storage compartment region upwards, and **in that**, in its closed position, preferably in its oblique closed position, the upper covering flap (5) covers the opening region (7) between the front edge (8) of the upper wall (9) and the upper edge (6) of the lower covering flap (4).

5. Lockable storage compartment according to one of the preceding claims, **characterized in that** the upper covering flap (5) can be pivoted about a pivot axis (12) between the closed position and the open position, and can be pivoted in the open position into the storage compartment region, in particular under a rear upper wall (9).

6. Lockable storage compartment according to one of Claims 1 to 4, **characterized in that** the upper covering flap (5) can be displaced between the closed position and the open position, in particular under a rear upper wall (9), in guides (13) which are attached in each case laterally on the storage compartment inner sides.

7. Lockable storage compartment according to one of the preceding claims, **characterized in that** the upper covering flap (5) is configured in one piece.

8. Lockable storage compartment according to Claim 7, **characterized in that** the upper covering flap (5) is curved convexly, in the shape of a cylindrical cut-out, in particular of a circular-cylindrical cut-out.

9. Lockable storage compartment according to one of Claims 1 to 6, **characterized in that** the upper covering flap (5) is configured in multiple pieces by way of slats in the manner of a roller blind, and is guided in guides.

10. Vehicle, in particular commercial vehicle, having a lockable storage compartment according to one of the preceding claims.

11. Vehicle according to Claim 10, **characterized in that** the storage compartment (1) is installed in the footwell laterally in front of a driver's seat (2) of a motor vehicle, in particular of a commercial vehicle.

## Revendications

1. Compartiment de rangement (1) pouvant être fermé, notamment dans l'espace-pieds d'un véhicule automobile, avec deux clapets de rabattement (4, 5) pour fermer une ouverture d'espace de rangement du compartiment de rangement ;
**caractérisé en ce que** :
un clapet de rabattement (4) inférieur est orienté verticalement par rapport à une direction d'axe vertical et/ou une position encastrée dans la position fermée et recouvre une région d'ouverture verticale inférieure de l'ouverture d'espace de rangement du compartiment de rangement (1), le clapet de rabattement (4) inférieur pouvant pivoter autour d'un axe de pivotement (15) placé dans la région de son bord inférieur en s'écartant de telle sorte vers l'avant par rapport à l'ouverture d'espace de rangement que la région d'ouverture inférieure de l'ouverture d'espace de rangement est agrandie par rapport à la position fermée ; et
un clapet de rabattement (5) supérieur par rapport à la direction d'axe vertical et/ou à la position encastrée et actionnable indépendamment du clapet de rabattement (4) inférieur recouvre dans la position fermée une région d'ouverture (7) supérieure de l'ouverture d'espace de rangement du compartiment de rangement (1), le clapet de rabattement (5) supérieur étant déplacé vers l'intérieur dans l'intérieur de compartiment de rangement dans la position ouverte et permettant une prise par en haut dans le compartiment de rangement (1) du clapet de rabattement (4) inférieur se trouvant tant en soi dans la position ouverte qu'en soi dans la position fermée.

2. Compartiment de rangement pouvant être fermé selon la revendication 1, **caractérisé en ce que** le clapet de rabattement (5) supérieur se raccorde dans la position fermée à un bord supérieur (6) horizontal du clapet de rabattement (4) inférieur et/ou s'étend vers le haut et l'arrière de façon oblique.

3. Compartiment de rangement pouvant être fermé selon la revendication 1 ou 2, **caractérisé en ce que** le clapet de rabattement (4) inférieur recouvre au moins approximativement la moitié de la hauteur du compartiment de rangement, de préférence approximativement les 2/3 de la hauteur du compartiment de rangement.

4. Compartiment de rangement pouvant être fermé selon l'une quelconque des revendications précédentes, **caractérisé en ce que** :
le compartiment de rangement (1) comporte une paroi supérieure (9) fixe non ouvrable délimitant notamment vers le haut de façon définie par une sous-structure (3) ou un encastrement du compartiment de rangement (1) la région d'espace de rangement ; et
le clapet de rabattement (5) supérieur recouvre dans sa position fermée, de préférence dans sa position fermée oblique, la région d'ouverture (7) entre le bord avant (8) de la paroi supérieure (9) et le bord supérieur (6) du clapet de rabattement (4) inférieur.

5. Compartiment de rangement pouvant être fermé selon l'une quelconque des revendications précédentes, **caractérisé en ce que** le clapet de rabattement (5) supérieur peut pivoter autour d'un axe de pivotement (12) entre la position fermée et la position ouverte et peut pivoter vers l'intérieur dans la région du compartiment de rangement dans la position ouverte, notamment sous une paroi supérieure (9) arrière.

6. Compartiment de rangement pouvant être fermé selon l'une quelconque des revendications 1 à 4, **caractérisé en ce que** le clapet de rabattement (5) supérieur peut être déplacé dans des guides (13) respectivement placés en côté au niveau des côtés intérieurs d'espace de rangement entre la position fermée et la position ouverte, notamment sous une paroi supérieure (9) arrière.

7. Compartiment de rangement pouvant être fermé selon l'une quelconque des revendications précédentes, **caractérisé en ce que** le clapet de rabattement (5) supérieur est réalisé d'un seul tenant.

8. Compartiment de rangement pouvant être fermé selon la revendication 7, **caractérisé en ce que** le clapet de rabattement (5) supérieur est cintré de façon convexe en forme de détouré cylindrique, notamment de détouré circulaire.

9. Compartiment de rangement pouvant être fermé selon l'une quelconque des revendications 1 à 6, **caractérisé en ce que** le clapet de rabattement (5) supérieur est réalisé en plusieurs parties par le biais de lamelles de type rouleau et guidé dans les guides.

10. Véhicule, notamment véhicule utilitaire, avec un compartiment de rangement pouvant être fermé selon l'une quelconque des revendications précédentes.

11. Véhicule selon la revendication 10, **caractérisé en ce que** le compartiment de rangement (1) est encastré dans l'espace-pieds, en côté, devant un siège de conducteur (2) d'un véhicule automobile, notamment d'un véhicule utilitaire.
